(19) Europäisches Patentamt / European Patent Office / Office européen des brevets

(11) **EP 3 779 891 A1**

(12) **EUROPEAN PATENT APPLICATION**
published in accordance with Art. 153(4) EPC

(43) Date of publication:
**17.02.2021 Bulletin 2021/07**

(21) Application number: **19778365.7**

(22) Date of filing: **01.03.2019**

(51) Int Cl.:
**G06T 15/20** (2011.01)

(86) International application number:
**PCT/CN2019/076724**

(87) International publication number:
**WO 2019/184654 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2018 CN 201810253848**

(71) Applicant: **TENCENT TECHNOLOGY (SHENZHEN) COMPANY LIMITED**
**Shenzhen, Guangdong 518057 (CN)**

(72) Inventors:
• **LUO, Wenhan**
  **Shenzhen, Guangdong 518057 (CN)**
• **MA, Lin**
  **Shenzhen, Guangdong 518057 (CN)**
• **LIU, Wei**
  **Shenzhen, Guangdong 518057 (CN)**

(74) Representative: **AWA Sweden AB**
**P.O. Box 45086**
**104 30 Stockholm (SE)**

(54) **METHOD AND DEVICE FOR TRAINING NEURAL NETWORK MODEL, AND METHOD AND DEVICE FOR GENERATING TIME-LAPSE PHOTOGRAPHY VIDEO**

(57)    A method and device for training a neural network model, and a method and device for generating a time-lapse photography video. The method for generating a time-lapse photography video comprises: acquiring specified images; generating, according to the specified images, an image set comprising a first preset number of frames of specified images; and according to the image set, performing content modeling and motion state modeling on the image set by means of a pre-trained neural network model to obtain a time-lapse photography video output by the neural network model, wherein the neural network model comprises a basic network for performing content modeling on the time-lapse photography video and an optimized network for modeling a motion state of the time-lapse photography video, and is obtained by acquiring a training sample and performing training according to the training sample comprising a training video and the image set corresponding thereto. A multi-stage generative adversarial network performing sustainability optimization on a time-lapse photography video, and content modeling and motion state modeling ensure reasonable prediction and realize the gradual generation of the time-lapse photography video from rough to subtle.

Obtain a specified image — S11

Generate, according to the specified image, an image set including a first preset number of frames of the specified images — S12

Perform modeling on content and a motion state of the image set according to the image set by using a pre-trained neural network model, to obtain a time-lapse photography video outputted by the neural network model — S13

FIG. 1

EP 3 779 891 A1

**Description**

This application claims priority to Chinese Patent Application No. 201810253848.3, filed with the Chinese Patent Office on March 26, 2018 and titled "METHOD AND DEVICE FOR TRAINING NEURAL NETWORK MODEL, AND METHOD AND DEVICE FOR GENERATING TIME-LAPSE PHOTOGRAPHY VIDEO", which is incorporated herein by reference in its entirety.

FIELD

The present disclosure relates to the technical field of artificial intelligence, and in particular to a method for training a neural network model, a method for generating a time-lapse photography video, and a corresponding apparatus, system, device, storage medium, and computer program product.

BACKGROUND

**Error! Hyperlink reference not valid.** also referred to as time-of-time photography, in which time is compressed. In the time-lapse photography, a set of photos are taken, and photos taken during minutes, hours or even days or years are compressed into a video lasting for a short period of time by photo stitching, and the video is played. Currently, a time-lapse photography video generating method is still in a stage of academic research, and is mainly implemented through a neural network model. However, a video generated by the method is vague in content, relatively poor in reality, and is difficult to meet user requirements. Therefore, the method has not been widely used.

SUMMARY

In view of this, a method for training a neural network model and a method for generating a time-lapse photography video are provided according to embodiments of the present disclosure. With the methods, a clear and smooth time-lapse photography video with high reality can be generated, so that user requirements are met and thus the methods have wide application prospects. A corresponding apparatus, system, device, storage medium, and computer program product are further provided according to the present disclosure.

To achieve the foregoing objective, the following technical solutions are provided according to embodiments of the present disclosure.

A method for training a neural network model is provided. The method is applied to a server and includes:

obtaining a training sample, where the training sample includes a training video and an image set corresponding to the training video, and the image set includes a head-frame image or an end-frame image in the training video with a first preset number of frames;

obtaining, through training according to the training sample, a neural network model meeting a training ending condition, where the neural network model includes a basic network used for performing modeling on content of a time-lapse photography video and an optimization network used for performing modeling on a motion state of the time-lapse photography video,

where the basic network is a first generative adversarial network in which an image set including the first preset number of frames of same images are inputted and a basic time-lapse photography video is outputted; and

the optimization network is a second generative adversarial network in which output of the basic network is inputted and an optimized time-lapse photography video is outputted.

A method for generating a time-lapse photography video is provided. The method is applied to an electronic device, and includes:

obtaining a specified image;

generating, according to the specified image, an image set including a first preset number of frames of the specified images; and

performing modeling on content and a motion state of the image set according to the image set by using a pre-trained neural network model, to obtain a time-lapse photography video outputted by the neural network model, where the neural network model is obtained through training by using the method for training a neural network model according to the present disclosure.

An apparatus for training a neural network model is provided. The apparatus includes: an obtaining module and a training module. The obtaining module is configured to obtain a training sample. The training sample includes a training video and an image set corresponding to the training video, and the image set includes a head-frame image or an end-frame image in the training video with a first preset number of frames. The training module is configured to obtain, through training according to the training sample, a neural network model meeting a training ending condition. The neural network model includes a basic network used for performing modeling on content of a time-lapse photography video and an optimization network used for performing modeling on a motion state of the time-lapse photography video. The basic network is a first generative adversarial network in which the image set including the first preset number of frames of same images are inputted and a basic time-lapse photography video is outputted. The optimization network is a second generative adversarial network in which output of the basic network is inputted and an optimized time-lapse photography video is outputted.

An apparatus for generating a time-lapse photography video is provided. The apparatus includes: an obtaining module, a first generating module and a second generating module. The obtaining module is configured to obtain a specified image. The first generating module is configured to generate, according to the specified image, an image set including a first preset number of frames of the specified image. The second generating module is configured to perform modeling on content and a motion state of the image set according to the image set by using a pre-trained neural network model, to obtain a time-lapse photography video outputted by the neural network model. The neural network model is obtained through training by using the method for training a neural network model according to the present disclosure.

A system for generating a time-lapse photography video is provided. The system includes: a terminal and a server. The terminal interacts with the server over a network. The server is configured to receive a specified image transmitted by the terminal, generate, according to the specified image, an image set including a first preset number of frames of the specified images, perform modeling on content and a motion state of the image set according to the image set by using a pre-trained neural network model, to obtain a time-lapse photography video outputted by the neural network model, and transmit the time-lapse photography video to the terminal. The neural network model is obtained through training by using the method for training a neural network model according to the present disclosure.

An electronic device is provided. The electronic device includes: a processor and a memory. The memory is configured to store a computer program. The processor is configured to invoke and execute the computer program stored in the memory, to implement the method for training a neural network model according to the present disclosure, or to implement the method for training a time-lapse photography video according to the present disclosure.

A storage medium stores a computer program. When being executed by a processor, the computer program implements steps of the foregoing method for training a neural network model so as to generate a time-lapse photography video, and/or steps of the foregoing method for generating a time-lapse photography video.

A computer program product including an instruction is provided. When run on a computer, the instruction causes the computer to perform the method for training a neural network model according to the present disclosure, or perform the method for generating a time-lapse photography video according to the present disclosure.

As can be known from the foregoing technical solutions, compared with the conventional art, a method for generating a time-lapse photography video by using a dual network architecture-based model. The dual network architecture includes a basic network used for performing modeling on content of a time-lapse photography video and an optimization network used for performing modeling on a motion state of the time-lapse photography video. The basic network is a first generative adversarial network in which a video including a first preset number of frames of specified frame images are inputted and a basic time-lapse photography video is outputted. The optimization network is a second generative adversarial network in which output of the basic network is inputted and an optimized time-lapse photography video is outputted, and which is used for performing modeling on a motion state of the time-lapse photography video. After multiple training videos are obtained, image sets corresponding to the training videos are generated according to the training videos. The image set includes a head-frame image or an end-frame image in the training video with a first preset number of frames. A neural network model formed by the basic network and the optimization network is trained by using the training videos and the image sets corresponding to the training videos. When a training ending condition is met, the video may be used for generating the time-lapse photography video.

A specified image is obtained, a specified image set including a first preset number of frames of the specified images is generated according to the specified image, and then modeling is performed on content and a motion state of the specified image set by using a pre-trained neural network model, to obtain a time-lapse photography video outputted by the neural network model. According to the method, the time-lapse photography video is continuously optimized by a multi-stage generative adversarial network, and a future frame or a historical frame is reasonably predicted by performing modeling on content and the motion state, to generate the time-lapse photography video from crude to fine gradually. According to the method, on one hand, reality of the content and reasonability of motion information are reserved, so that the generated time-lapse photography video has relatively high reality and is relatively natural. On the other hand, the model used in the method has a cascaded dual network architecture, which is easy to be implemented and simplified and may be applied to a cloud or an offline scenario.

BRIEF DESCRIPTION OF THE DRAWINGS

To describe the technical solutions in the embodiments of the present disclosure or in the conventional art more clearly, the accompanying drawings required for describing the embodiments or the conventional art are briefly introduced hereinafter. Apparently, the accompanying drawings in the following description show merely the embodiments of the present disclosure, and a person of ordinary skill in the art can derive other drawings from these accompanying drawings without creative efforts.

FIG. 1 is a flowchart of a method for generating a time-lapse photography video according to an embodiment of the present disclosure.

FIG. 2 is a flowchart of a method for training a neural network model according to an embodiment of the present disclosure.

FIG. 3 is a flowchart of another method for training a neural network model according to an embodiment of the present disclosure.

FIG. 4 is a flowchart of a basic network training method according to an embodiment of the present disclosure.

FIG. 5 is a structural diagram of a basic network according to an embodiment of the present disclosure.

FIG. 6 is a flowchart of an optimization network training method according to an embodiment of the present disclosure.

FIG. 7 is a structural diagram of an optimization network according to an embodiment of the present disclosure.

FIG. 8 is a structural diagram of a system for generating a time-lapse photography video according to an embodiment of the present disclosure.

FIG. 9 is a signaling flowchart of a method for generating a time-lapse photography video according to an embodiment of the present disclosure.

FIG. 10 is a structural diagram of an apparatus for generating a time-lapse photography video according to an embodiment of the present disclosure.

FIG. 11 is a structural diagram of an apparatus for training a neural network model according to an embodiment of the present disclosure.

FIG. 12 is a structural diagram of another apparatus for training a neural network model according to an embodiment of the present disclosure.

FIG. 13 is a hardware structural diagram of an electronic device according to an embodiment of the present disclosure.

DETAILED DESCRIPTION OF EMBODIMENTS

The technical solutions in the embodiments of the present disclosure are described clearly and completely with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.
To enable the foregoing objective, feature, and advantage of the present disclosure to be clearer and easier to be understood, the present disclosure is further described in detail with reference to accompanying drawings and specific embodiments hereinafter.

Embodiments

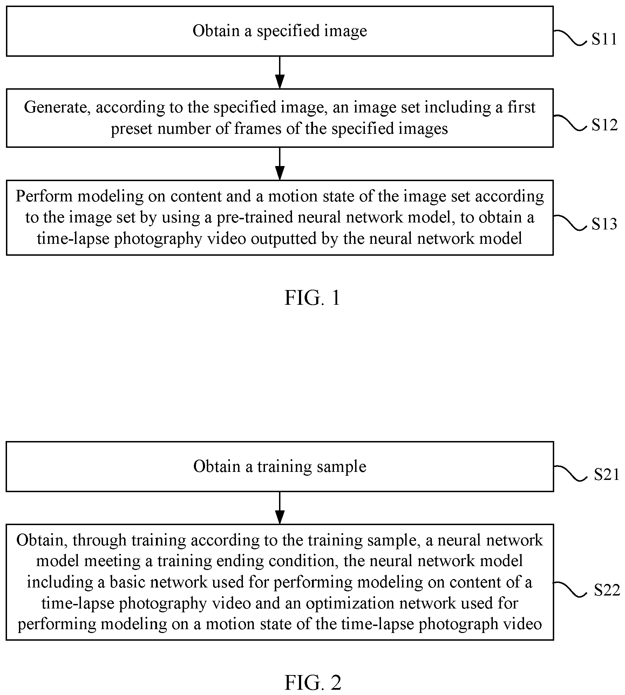

A method for generating a time-lapse photography video is provided According to an embodiment of the present disclosure. The method may be applied to an electronic device. The electronic device may be a local terminal, or may be a cloud server, or may be a time-lapse photography video generating system formed by a terminal and a server. FIG. 1 is a flowchart of a method for generating a time-lapse photography video according to an embodiment of the present disclosure. As shown in FIG. 1, the method includes the following steps S11 to S13.

In step S11, a specified image is obtained.

In a case that the method is implemented by a terminal, the specified image may be obtained in two manners. In a first manner, a photo is selected from an album as the specified image. Specifically, the terminal obtains the photo selected from the album as the specified image in response to a selection instruction. In a second manner, an image shot in real time functions as the specified image. Specifically, the terminal obtains the shot photo as the specified image in response to a shooting instruction. In a case that the method is implemented by a server, the server receives a time-lapse photography generating request transmitted by the terminal. The time-lapse photography generating request carries the specified image, and the server may obtain the specified image from the time-lapse photography generating request.

In step S12, according to the specified image, an image set including a first preset number of frames of the specified images is generated.

Two manners for generating the image set are described in the embodiment. In a first manner, the specified image is copied until the number of the specified images reaches a first preset number, and then the image set is generated according to the first preset number of frames of the specified images. In a second manner, the specified image is obtained repeatedly from a data source. For example, the same image, that is, the specified image, is obtained repeatedly from an album, until the number of the specified images reaches a first preset number, and then the image set is generated according to the first preset number of frames of the specified images.

In an embodiment, the first preset number may be 32, that is, the image set includes 32 specified images. A specific value of the first preset number is not limited in the present disclosure and may be adjusted according to actual requirements, and different values of the first preset number do not depart from the protection scope of the present disclosure.

In step S13, modeling is performed on content and a motion state of the image set according to the image set by using a pre-trained neural network model, to obtain a time-lapse photography video outputted by the neural network model.

The neural network model includes a basic network and an optimization network. The basic network is used for performing modeling on content of the time-lapse photography video, and is a generative adversarial network in which the image set including the first preset number of frames of the specified images are inputted and a basic time-lapse photography video is outputted. For convenience of description, the network is called a first generative adversarial network. The optimization network is used for performing modeling on a motion state of the time-lapse photography video, and is a generative adversarial network in which output of the basic network is inputted, and an optimized time-lapse photography video is outputted. For convenience of description, the network is called a second generative adversarial network.

The generative adversarial network is a network implemented based on a two-person zero-sum game theory. The network includes a generative model (also called a generator) and a discriminative model (also called a discriminator). The generative model captures a distribution of sample data, and generates sample data similar to real training data by using noise obeying a distribution (for example, a uniform distribution and a Gaussian distribution). The discriminative model is a binary classifier and is used for estimating a probability of sample data deriving from real training data (but not generated data). If the sample derives from the real training data, a high probability is outputted; otherwise, a small probability is outputted. The generative model is intended to generate sample data same as the real training data, so that the discriminative model cannot discriminate. The discriminative model is intended to detect the sample data generated by the generative model.

In this embodiment, the electronic device is provided with a neural network model. A specified image set is inputted into the neural network model, a basic network of the neural network model performs modeling on content of a time-lapse photography video to generate a basic time-lapse photography video. Subsequently, the basic time-lapse photography video outputted by the basic network is inputted into an optimization network. The optimization network performs modeling on a motion state of the time-lapse photography video to output an optimized time-lapse photography video. The optimized time-lapse photography video is the finally outputted time-lapse photography video.

It should be noted that the video generated by the time-lapse photography video generating method provided by this embodiment may be a video representing the future, or may be a video representing the past, which mainly depends on the used neural network model. If the model predicts a future frame and implements a forward prediction, the video representing the future is generated. If the model predicts a historical frame and implements a backward prediction, the video representing the past is generated.

For convenience of understanding, description is made below with reference to a simple example. If a user wants to generate a time-lapse photography video representing a blooming process of a flower, a photo of the flower being a flower bud may function as a specified image. The specified image is copied to obtain a first preset number of frames of the specified images to generate an image set, and then the image set is inputted into a neural network model that can predict a future frame. The neural network model can output a time-lapse video of the flower gradually blooming from the flower bud to full bloom.

In some possible implementations, if a user wants to generate a time-lapse photography video representing a blooming process of a flower, a photo of the flower in full bloom may function as a specified image. The specified image is copied to obtain a first preset number of frames of the specified images to generate an image set, and then the image set is inputted into a neural network model that can predict a historical frame. Because the neural network model can predict the historical frame of the flower before full bloom, the time-lapse video of the flower gradually blooming from a flower bud to full bloom can be outputted.

A neural network model training process is described below, and details are not described herein again.

A method for generating time-lapse photography video is provided according to an embodiment of the present disclosure. According to the method, modeling is performed on content and a motion state of an image set including a first preset number of frames of specified images by using a pre-trained neural network model to generate a time-lapse photography video. According to the method, the time-lapse photography video is continuously optimized by a multi-stage generative adversarial network, and a future frame or historical frame is reasonably predicted by performing modeling on content and the motion state, to generate the time-lapse photography video from crude to fine gradually. According to the method, on one hand, reality of the content and reasonability of motion information are reserved, so that the generated time-lapse photography video has relatively high reality and is relatively natural. On the other hand, the model used in the method has a cascaded dual network architecture, which is easy to be implemented and simplified and may be applied to a cloud or an offline scenario.

In the foregoing embodiment of the present disclosure, a neural network model that has been pre-trained and is used for generating the time-lapse photography video is used in step S13. It may be understood that the neural network model used for generating the time-lapse photography video needs to be trained in advance. A training process of the neural network model used for generating the time-lapse photography video is described hereinafter.

FIG. 2 is a flowchart of a method for training a neural network model according to an embodiment of the present disclosure. As shown in FIG. 2, the method includes the following steps S21 and S22.

In step S21, a training sample is obtained.

The training sample includes a training video and an image set corresponding to the training video. The image set includes a head-frame image or an end-frame image in the training video with a first preset number of frames. It should be noted that the neural network model is trained usually by using a batch of training samples, and each image included in image sets of the batch of training samples is a head-frame image in the training video, or is an end-frame image in the training video.

The training video is a time-lapse photography video. Specifically, time-lapse photography videos obtained in advance are pre-processed to generate multiple qualified training videos. Qualified, independent, and non-coincident training videos are obtained from the multiple training videos.

In an embodiment, a large number of time-lapse photography videos are crawled from the Internet in advance by setting a keyword, and the crawled time-lapse photography videos generally have large sizes. Therefore, the large videos may be segmented into small video segments. During this process, inappropriate training data, such as small video segments of which the picture is still, the picture has a large black border, the picture is dark, or the picture is rapidly enlarged or shrunk, is removed. After the inappropriate video segments are removed, qualified, independent, and non-coincident training videos may be obtained from the remaining video segments, according to a rule that a training video is formed by a first preset number of frames. For example, if a video segment includes 128 frames and a first preset number is 32, the video segment may be segmented into 4 training videos, each of which includes 32 frames. Each training video includes a first preset number of frames of images, and the first preset number may be 32, which is relatively appropriate in size and facilitates training. Certainly, the first preset number may be set according to actual requirements. A specific value of the first preset number is not limited in the present disclosure, and different values of the first preset number do not depart from the protection scope of the present disclosure.

In this embodiment, the training sample may be obtained in the following manners. Specifically, the training video is obtained first. Then the head-frame image or the end-frame image is extracted from the training video, to generate an image set corresponding to the training video, and the training video and the image set corresponding to the training video are used as the training sample. After the head-frame image or the end-frame image is extracted from the training video, the image set corresponding to the training video may be generated in two manners. In one manner, the extracted image is copied until the number of the images reaches the first preset number, and the image set is generated according to the first preset number of frames of the images. In another manner, the first preset number of frames of the head-frame images, or the first preset number of frames of the end-frame images are obtained through extraction for many times, to generate the image set.

In step S23, through training according to the training sample, a neural network model meeting a training ending condition is obtained.

The neural network model includes a basic network used for performing modeling on content of a time-lapse photography video and an optimization network used for performing modeling on a motion state of the time-lapse photography video. The basic network is a first generative adversarial network in which the image set including the first preset number of frames of same images is inputted and a basic time-lapse photography video is outputted. The optimization network is a second generative adversarial network in which output of the basic network is inputted and an optimized time-lapse photography video is outputted.

In this embodiment, both the basic network and the optimization network are generative adversarial networks. The basic network can perform modeling on content of the image set including the first preset number of frames of same images, to generate the basic time-lapse photography video. Based on this, the optimization network may further perform modeling on a motion state of the basic time-lapse photography video, so that optimization is performed continuously, thereby generating a more real and more natural optimized time-lapse photography video.

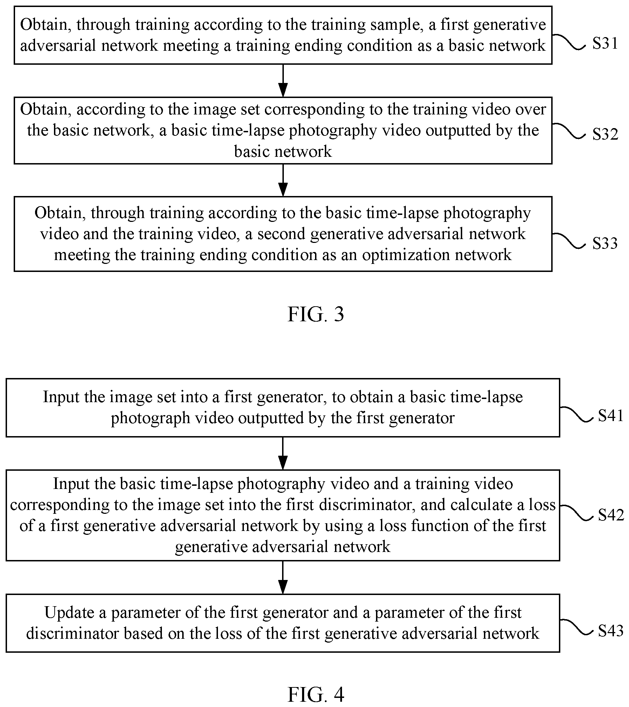

The process of obtaining, according to the training sample, the neural network model meeting the training ending condition in step S22 is described in detail hereinafter. FIG. 3 is a flowchart of another method for training a neural network model according to an embodiment of the present disclosure. As shown in FIG. 3, the method includes the following steps S31 to S33 hereinafter.

In step S31, through training according to a training sample, a first generative adversarial network meeting a training ending condition is obtained as a basic network.

The training sample includes a training video and an image set corresponding to the training video. In the basic network, the image set is inputted, and modeling is performed on content to output a basic time-lapse photography video. The basic network is intended to generate a basic time-lapse photography video close to the training video. In this way, a parameter of the first generative adversarial network can be adjusted based on a degree of similarity between the generated video and the training video, and the first generative adversarial network is optimized by adjusting the parameter continuously. When the training ending condition is met, the first generative adversarial network functions as the basic network.

The training ending condition may be set according to actual requirements. For example, a loss function of the first generative adversarial network is in a convergence state, or a loss function of the first generative adversarial network is less than a preset value. A basic network training process is described in detail below, and details are not described herein again.

In step S32, according to the image set corresponding to the training video, a basic time-lapse photography video outputted by the basic network is obtained over the basic network.

In the basic network, the image set including a first preset number of frames of same images is inputted and the basic time-lapse photography video is outputted. The image set corresponding to the training video may be inputted into the basic network, to obtain the basic time-lapse photography video outputted by the basic network.

In step S33, through training according to the basic time-lapse photography video and the training video, a second generative adversarial network meeting the training ending condition is obtained as an optimization network.

The optimization network is used for further optimizing the basic time-lapse photography video, and may be obtained through training the generative adversarial network. In specific implementation, the basic time-lapse photography video and the training video may function as the training sample, the basic time-lapse photography video may function as an input, an optimized time-lapse photography video may function as an output, and a target is to generate an optimized time-lapse photography video close to the training video. In this way, a parameter of the second generative adversarial network can be adjusted based on a degree of similarity between the generated optimized time-lapse photography video and the training video, and the second generative adversarial network is optimized by adjusting the parameter continuously. When the training ending condition is met, the second generative adversarial network functions as the optimization network.

The training ending condition may be set according to actual requirements. For example, a loss function of the second generative adversarial network is in a convergence state, or a loss function of the second generative adversarial network is less than a preset value. An optimization network training process is described in detail below, and details are not described herein again. After being trained, the basic network and the optimization network are cascaded to form the neural network model for generating the time-lapse photography video.

The basic network training process in step S31 is described in detail hereinafter. FIG. 4 is a flowchart of a method for training a basic network according to an embodiment of the present disclosure. As shown in FIG. 4, the method includes the following steps S41 to S43 hereinafter.

In step S41, the image set is inputted into a first generator, to obtain a basic time-lapse photography video outputted by the first generator.

In this embodiment, the basic network includes the first generator and a first discriminator. The first generator is configured to generate the basic time-lapse photography video, and the first discriminator is configured to discriminate whether the basic time-lapse photography video is a real video. If the first discriminator determines that the basic time-lapse photography video is a real video, it is indicated that the basic time-lapse photography video generated by the first generator has relatively high reality and is relatively natural.

The first generator may be formed by an encoder and a decoder. In specific implementation, the encoder includes a specified number of convolutional layers, and the decoder may include a specified number of deconvolutional layers. In this way, the encoder is in a symmetric structure as a whole. The specified number may be set according to actual requirements, for example, may be 6. Each convolutional layer is in a jumper connection to a deconvolutional layer symmetrical to the convolutional layer, so that features of the encoder can be better used. After being processed by the first generator of the basic network, a video frame with the same resolution as an inputted original image is outputted.

The first discriminator is configured to discriminate between a video (that is, a predicted video) generated by the first generator and the training video (that is, the real video) described above, to ensure that the first generator generates a more real video. The first discriminator has the same structure as the encoder in the first generator except that an output layer is a binary classification layer. It should be noted that, the number of the convolutional layers in the first discriminator may be adjusted according to actual requirements, and is not limited in the present disclosure.

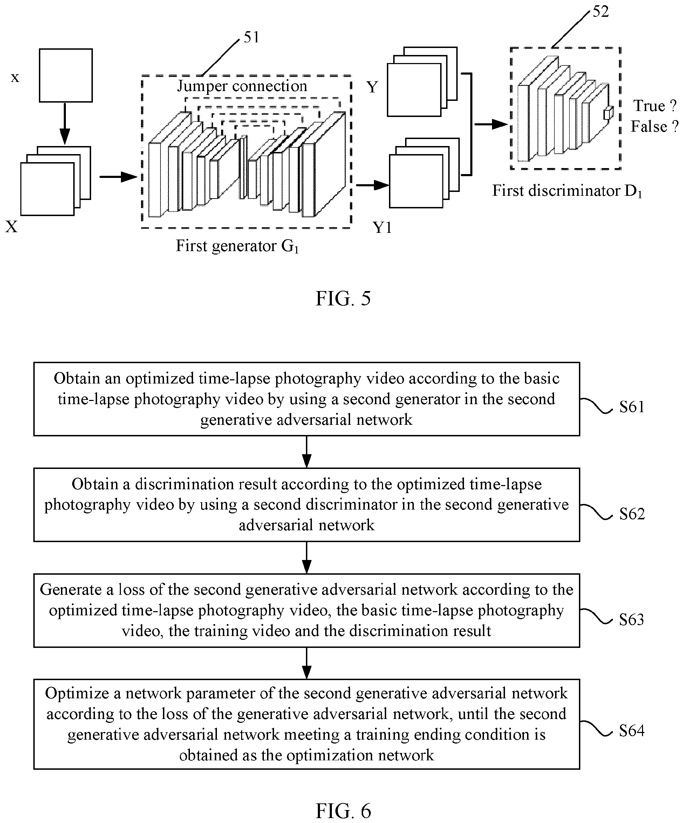

FIG. 5 is a structural diagram of a basic network according to an embodiment of the present disclosure. As shown in FIG. 5, the basic network includes a first generator 51 and a first discriminator 52, x represents a head-frame image or an end-frame image, X represents an image set formed by the head-frame images or an image set formed by the end-head images, Y represents a training video, and Y1 represents a basic time-lapse photography video outputted by the first generator.

In step S42, the basic time-lapse photography video and a training video corresponding to the image set are inputted into the first discriminator, and a loss of a first generative adversarial network is calculated by using a loss function of the first generative adversarial network.

In this embodiment, in order to ensure that a generator generates a video with relatively high reality, a discriminator, that is, the first discriminator, is used to discriminate between the video generated by the generator and the real video. The first discriminator has a structure similar to that of the encoder in the first generator, except that the output layer of the first discriminator is the binary classification layer. The basic time-lapse photography video outputted by the first generator and the training video are inputted into the first discriminator, and the first discriminator calculates a first generative adversarial loss according to the basic time-lapse photography video and the training video.

In this embodiment, the loss of the first generative adversarial network is reduced by adjusting a network parameter, to implement training of the basic network. The loss of the first generative adversarial network includes at least an adversarial loss, and the adversarial loss may be calculated based on the following formula:

$$\mathrm{L}_{adv} = \min_{G_1} \max_{D_1} E[\log D_1(Y)] + E[\log(1 - D_1(G_1(X)))] \qquad (1).$$

In which, $\mathrm{L}_{adv}$ represents an adversarial loss, E represents an expectation, $D_1$ represents a function corresponding to a first generator, $G_1$ represents a function corresponding to a first discriminator, X represents a four-dimensional matrix corresponding to an image set, and Y represents a four-dimensional matrix corresponding to a training video (to which the image set corresponds). Four dimensions of the four-dimensional matrix are a length of an image, a width of the image, the number of channels (refers to the number of channels of the image; if the image is in an RGB color mode, the number of channels is 3), and the number of frames of the image.

In which, $\min_{G_1} \max_{D_1}$ represents that: when the adversarial loss of the first generator is calculated, the function $D_1$ of the first discriminator takes a constant (that is, a fixed value), and the function $G_1$ of the first generator takes a maximum value; and when the adversarial loss of the first discriminator is calculated, the function $G_1$ of the first generator takes a constant (that is, a fixed value), and the function $D_1$ corresponding to the first discriminator takes a maximum value.

To ensure that content of the video generated by the first generator is sufficiently real, an L1 norm-based content loss function is further provided:

$$\mathrm{L}_{con}(G_1) = \left\| Y - G_1(X) \right\|_1 \qquad (2).$$

In which, $\mathrm{L}_{con}(G_1)$ represents a content loss, $G_1$ represents a function corresponding to a first discriminator, X represents a four-dimensional matrix corresponding to an image set, Y represents a four-dimensional matrix corresponding to a training video (to which the image set corresponds), and $\| \ \|_1$ represents calculating an L1 norm. That is, the loss of the first generative adversarial network may be a sum of the adversarial loss and the L1 norm-based content loss.

In step S43, a parameter of the first generator and a parameter of the first discriminator are updated based on the loss of the first generative adversarial network.

A gradient of each layer is calculated by using the loss of the first generative adversarial network, and the parameter of the first generator and the parameter of the first discriminator (for example, a weight and an offset) are updated. The first generative adversarial network is trained by continuously updating the parameter of the first generator and the parameter of the first discriminator. When the training ending condition is met, for example, the loss of the first generative adversarial network is in the convergence state, or is less than the preset value, the first generative adversarial network can be determined as the basic network.

The optimization network training process in step S33 is described in detail hereinafter. FIG. 6 is a flowchart of a method for training an optimization network according to an embodiment of the present disclosure. As shown in FIG. 6, the method includes the following steps S61 to S64.

In step S61, an optimized time-lapse photography video is obtained according to the basic time-lapse photography video by using a second generator in the second generative adversarial network.

The optimization network includes the second generator and a second discriminator. The second generator is configured to perform modeling on motion information of the basic time-lapse photography video to obtain the optimized time-lapse photography video. The second discriminator is configured to determine whether the optimized time-lapse photography video is a real video. If the second discriminator determines that the optimized time-lapse photography video is a real video, it is indicated that the optimized time-lapse photography video generated by the second generator has relatively high reality and is relatively natural.

Similar to the basic network, the second generator in the optimization network includes an encoder and a decoder. The encoder may be formed by M convolutional layers, and the decoder is formed by M deconvolutional layers. The encoder is in a symmetrical structure as a whole. M is a positive integer. In addition, a convolutional layer may be specified to be in a jumper connection to a deconvolutional layer symmetrical to the convolutional layer, so that features of the encoder may be better used. Which convolutional layer (or convolutional layers) being specified to be in a jumper connection to the deconvolutional layer symmetrical to the convolutional layer may be determined according to an experiment result after a specific quantity of experiments. This is not limited in the present disclosure.

The number (M) of the convolutional layers and the deconvolutional layers, and configuration of a parameter of each layer may all be adjusted according to actual requirements. For example, M may be equal to 6. This is limited in the present disclosure, as long as it is ensured that a resolution of an inputted image keeps consistent with that of an outputted image. That is, in the second generator of the optimization network, different numbers of the convolutional layers and the deconvolutional layers do not depart from the protection scope of the present disclosure. By comparison, it may be found that the second generator of the optimization network has a structure similar to that of the first generator of the basic network (except for the removal of several jumper connections, the remaining structure is the same).

The second discriminator of the optimization network has the same structure as the first discriminator of the basic network, and details are not described herein again.

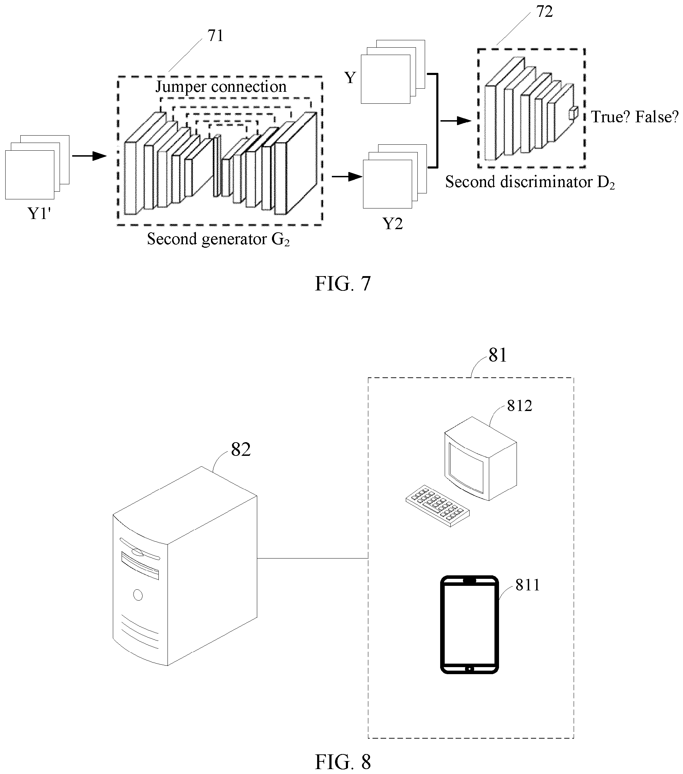

FIG. 7 is a structural diagram of an optimization network according to an embodiment of the present disclosure. As shown in FIG. 7, the optimization network includes a second generator 71 and a second discriminator 72, Y1' represents a basic time-lapse photography video outputted by the trained basic network, Y represents a training video, and Y2 represents an optimized time-lapse photography video outputted by the second generator.

In step S62, a discrimination result is obtained according to the optimized time-lapse photography video by using a second discriminator in the second generative adversarial network.

Similar to the first discriminator, the second discriminator may discriminate reality of the optimized time-lapse photography video generated by the second discriminator according to the optimized time-lapse photography video and the training video, to obtain a discrimination result. If the similarity between the optimized time-lapse photography video and the training video reaches a preset degree, it is determined that the optimized time-lapse photography video is a real video, that is, the optimized time-lapse photography video has relatively high reality.

In step S63, a loss of the second generative adversarial network is generated according to the optimized time-lapse photography video, the basic time-lapse photography video, the training video, and the discrimination result.

Similar to the basic network, a model of the optimization network is trained by adjusting a parameter to reduce the loss of the second generative adversarial network. The loss includes at least a ranking loss, and the ranking loss is determined according to motion features respectively corresponding to the optimized time-lapse photography video, the basic time-lapse photography video, and the training video.

In an embodiment, the loss of the second generative adversarial network may be determined according to a content loss, an adversarial loss, and the ranking loss of the second generative adversarial network. Based on this, in some possible implementations, a loss function of the optimization network may be: a sum of a product of a preset constant and a ranking loss function, the adversarial loss function, and the L1 norm-based content loss function.

An expression of the loss function of the optimization network is:

$$\mathbf{L}_{stage1} = \mathbf{L}_{adv} + \lambda \bullet \mathbf{L}_{rank} + \mathbf{L}_{con} \tag{3}$$

In which, $L_{stage1}$ represents a loss of an optimization network, $L_{adv}$ represents an adversarial loss, $L_{con}$ (that is, $L_{con}(G_1)$) represents a content loss, $\lambda$ represents a preset constant, and $L_{rank}$ represents a (total) ranking loss. The adversarial loss function and the L1 norm-based content loss function are described above, and details are not described herein again. The ranking loss function is described hereinafter.

In some possible implementations, a feature of the optimized time-lapse photography video, a feature of the basic time-lapse photography video, and a feature of the training video may be extracted respectively by using the second discriminator in the second generative adversarial network. A gram matrix corresponding to the optimized time-lapse photography video, a gram matrix corresponding to the basic time-lapse photography video, and a gram matrix corresponding to the training video are calculated respectively according to the feature. The gram matrix represents a motion state between video frames. Then the ranking loss may be determined according to the gram matrix corresponding to the optimized time-lapse photography video, the gram matrix corresponding to the basic time-lapse photography video, and the gram matrix corresponding to the training video. The ranking loss function is:

$$\mathbf{L}_{rank}(Y_1, Y, Y_2) = \sum_l \mathbf{L}_{rank}(Y_1, Y, Y_2; l) \tag{4}$$

In which, $L_{rank}(Y_1, Y, Y_2)$ represents a (total) ranking loss, $L_{rank}(Y_1, Y, Y_2; l)$ represents a single-layer (that is, a single feature layer) ranking loss function, $l$ represents a sequence number of a feature layer in the second discriminator, $Y_1$ represents a four-dimensional matrix corresponding to a basic time-lapse photography video, $Y$ represents a four-dimensional matrix corresponding to a training video (to which the image set corresponds), $Y_2$ represents a four-dimensional matrix corresponding to an optimized time-lapse photography video, and $\sum_l$ represents a summation. In an embodiment, $l$ (that is, which feature layers are selected) may be determined according to an experiment result after a specific quantity of experiments.

In an embodiment, an expression of the single-layer ranking loss function is:

$$\mathbf{L}_{rank}(Y_1, Y, Y_2; l) = -\log \frac{e^{-\|g(Y_2;l) - g(Y;l)\|_1}}{e^{-\|g(Y_2;l) - g(Y;l)\|_1} + e^{-\|g(Y_2;l) - g(Y_1;l)\|_1}} \tag{5}$$

In which, g(Y; 1) represents a gram matrix extracted from an 1 layer.

In step S64, a network parameter of the second generative adversarial network is optimized according to the loss of the second generative adversarial network, until the second generative adversarial network meeting the training ending condition is obtained as the optimization network.

A gradient of each layer is calculated by using the loss of the optimization network, and the parameter of the second generator and the second discriminator (for example, a weight and an offset) are updated. The second generative adversarial network is trained by continuously updating the parameter of the second generator and the second discriminator. When the training ending condition is met, for example, the loss of the second generative adversarial network is in the convergence state, or is less than the preset value, the second generative adversarial network can be determined as the optimization network.

In the foregoing embodiments, the first generator and the first discriminator are alternately trained. When the first generator is trained, the first discriminator is fixed; and when the first discriminator is trained, the first generator is fixed. Similarly, the second generator and the second discriminator are alternately trained. When the second generator is trained, the second discriminator is fixed, so that the ranking loss is minimized, to ensure that the optimized time-lapse photography video outputted by the second generator is closer to the real video (that is, the video generated by the second generator is more similar to the real video), and is farther away from (that is, increases differentiation) the video inputted into the second generator (that is, the video outputted by the basic network trained to be in a convergence state). When the second discriminator is trained, the second generator is fixed, so that the ranking loss is maximized to enlarge a difference between the optimized time-lapse photography video outputted by the second generator and the real video to facilitate further training the optimization network subsequently.

The optimization network obtained through training according to this embodiment can further optimize the video outputted by the basic network trained to be in the convergence state, mainly including optimizing the motion information.

The specific implementations of the method for generating a time-lapse photography video and the method for training a neural network model are described according to the embodiments of the present disclosure. Correspondingly, a system for generating a time-lapse photography video is further provided according to the present disclosure. FIG. 8 is a structural diagram of a system for generating a time-lapse photography video according to an embodiment of the present disclosure. As shown in FIG. 8, the system includes: a terminal 81 and a server 82. The terminal 81 interacts with the server 82 over a network.

The server 82 is configured to receive a specified image transmitted by the terminal, generate, according to the specified image, an image set including a first preset number of frames of the specified images, perform modeling on content and a motion state of the image set according to the image set by using a pre-trained neural network model, to obtain a time-lapse photography video outputted by the neural network model, and transmit the time-lapse photography video to the terminal. The neural network model is obtained through training by using the foregoing neural network model training method.

It may be understood that operations of the server 82 may further include steps of the training process of the neural network model used for generating the time-lapse photography video described above.

In an embodiment, the terminal 81 may be a mobile intelligent device 811 such as a smartphone, or may be a local computer device 812 such as a computer.

According to the technical solution provided by the embodiments of the present disclosure, a user only needs to upload a specified image by using a local terminal, and a remote server can output a predicted time-lapse photography video based on the specified image by using a neural network model for generating a time-lapse photography video, and transmit the video to the local terminal, so that the user can easily make a time-lapse photography video, thereby effectively improving user experience.

In addition, in the technical solution, the local terminal is unnecessary to run the neural network model for generating the time-lapse photography video, so that the time-lapse photography video can be made without occupying a running resource of the local terminal, thereby effectively saving the running resource of the local terminal.

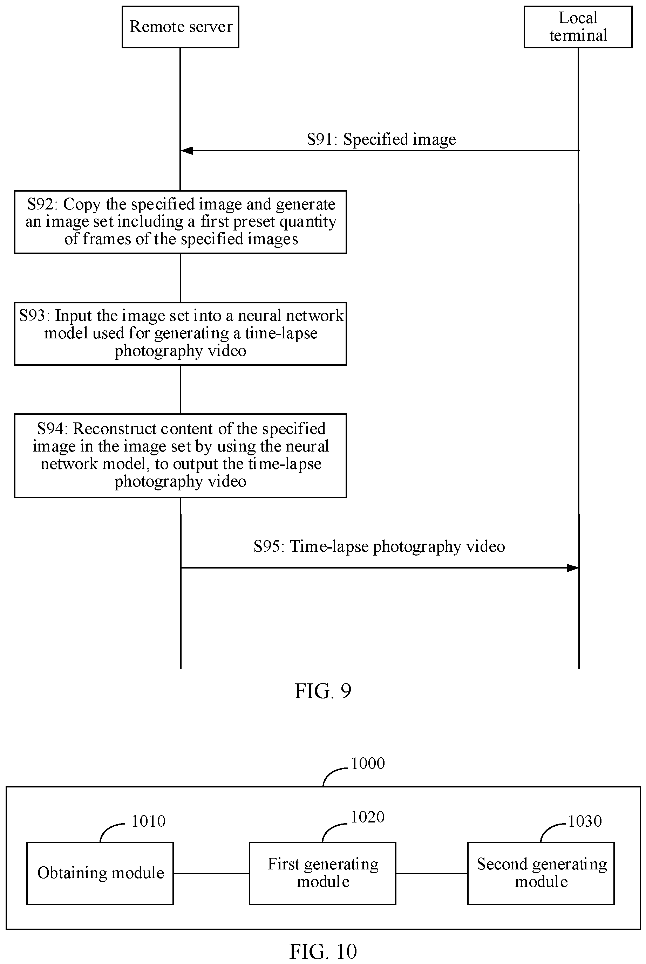

Corresponding to system for generating the time-lapse photography video provided according to the embodiments of the present disclosure, a signaling flow of a method for generating a time-lapse photography video is provided in the present disclosure. FIG. 9 is a signaling flowchart of a method for generating a time-lapse photography video according to an embodiment of the present disclosure. As shown in FIG. 9, the signaling flow includes steps S91 to S95 in the following.

In step S91, a local terminal transmits a specified image to a remote server.

In step S92, the remote server copies the specified image to generate an image set including a first preset number of frames of the specified images.

In step S93, the remote server inputs the image set into a neural network model for generating a time-lapse photography video.

In step S94, content of the specified images in the image set is reconstructed by using the neural network model, to output the time-lapse photography video.

In a case that the specified image is a head-frame image, modeling may be performed on content of subsequent multi-frame images, and content in the images is reconstructed. In a case that the specified image is an end-frame image, modeling may be performed on content of multi-frame images before the end-frame image, and content in the images is reconstructed, to generate the time-lapse photography video. In step S95, the remote server transmits the outputted time-lapse photography video to the local terminal.

According to the method, the time-lapse photography video is continuously optimized by a multi-stage generative adversarial network, and a future frame or a historical frame is reasonably predicted by performing modeling on the content and the motion state, to generate the time-lapse photography video from crude to fine gradually. According to the method, reality of the content and reasonability of motion information are reserved, so that the generated time-lapse photography video has relatively high reality and is relatively natural.

In addition, in the technical solution, the local terminal is unnecessary to run the neural network model for generating the time-lapse photography video, so that the time-lapse photography video can be made without occupying a running resource of the local terminal, thereby effectively saving the running resource of the local terminal.

In addition, the training process of the neural network model for generating the time-lapse photography video occupies a relatively large system resource. Therefore, preferably, the neural network model for generating the time-lapse photography video is trained at the remote server side.

To more fully describe the technical solution provided by the present disclosure, corresponding to the method for generating a time-lapse photography video provided by the embodiments of the present disclosure, an apparatus for generating a time-lapse photography video is provided according to the present disclosure.

FIG. 10 is a structural diagram of an apparatus for generating a time-lapse photography video according to an embodiment of the present disclosure. The apparatus may be applied to a local terminal, or a remote server side in the system for generating the time-lapse photography video. As shown in FIG. 10, the apparatus 1000 includes: an obtaining module 1010, a first generating module 1020 and a second generating module 1030.

The obtaining module 1010 is configured to obtain a specified image.

The first generating module 1020 is configured to generate, according to the specified image, an image set including a first preset number of frames of the specified images.

The second generating module 1030 is configured to perform modeling on content and a motion state of the image set according to the image set by using a pre-trained neural network model, to obtain a time-lapse photography video outputted by the neural network model. The neural network model is obtained through training according to the foregoing method for training the neural network model.

In an embodiment, in a case that the electronic device is a terminal device provided with the neural network model, the obtaining module 1010 is configured to: obtain a photo selected in an album as the specified image in response to a selection instruction; or obtain a shot photo as the specified image in response to a shooting instruction.

In an embodiment, in a case that the electronic device is a server, the obtaining module 1010 is configured to: receive a time-lapse photography generating request transmitted by the terminal device, the time-lapse photography generating request carrying the specified image; and obtain the specified image from the time-lapse photography generating request.

According to the apparatus for generating a time-lapse photography video provided by the embodiment of the present disclosure, a specified image is first obtained. A specified image set including a first preset number of frames of the specified images is generated according to the specified image, and then modeling is performed on content and a motion state of the specified image set by using a pre-trained neural network model, to obtain a time-lapse photography video outputted by the neural network model. According to the apparatus, the time-lapse photography video is continuously optimized by a multi-stage generative adversarial network, and a future frame is reasonably predicted by performing modeling on the content and the motion state, to generate the time-lapse photography video from crude to fine gradually. According to the apparatus, on one hand, reality of the content and reasonability of motion information are reserved, so that the generated time-lapse photography video has relatively high reality and is relatively natural. On the other hand, the model used in the apparatus has a cascaded dual network architecture, which is easy to be implemented and simplified and may be applied to a cloud or an offline scenario.

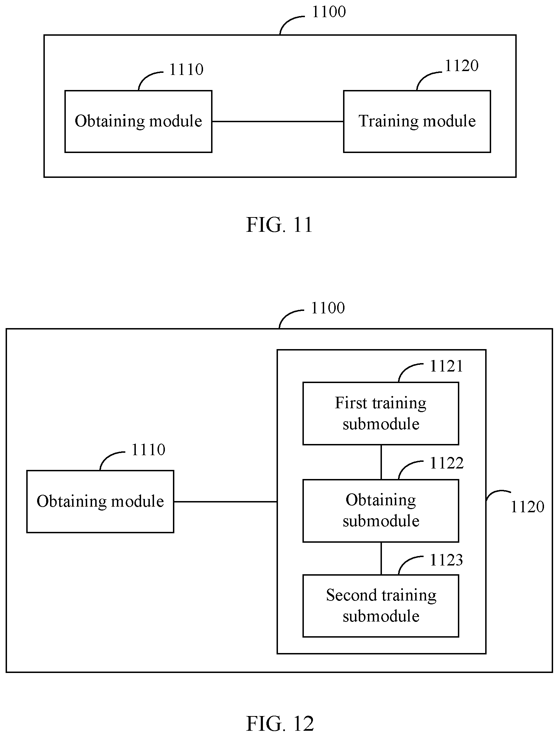

In an embodiment, FIG. 11 is a structural diagram of an apparatus for training a neural network model according to an embodiment of the present disclosure. As shown in FIG. 11, the apparatus 1100 includes: an obtaining module 1110 and a training module 1120.

The obtaining module 1110 is configured to obtain a training sample. The training sample includes a training video and an image set corresponding to the training video. The image set includes a head-frame image or an end-frame image in the training video with a first preset number of frames.

The training module 1120 is configured to obtain, through training according to the training sample, a neural network model meeting a training ending condition. The neural network model includes a basic network used for performing modeling on content of a time-lapse photography video and an optimization network used for performing modeling on a motion state of the time-lapse photography video. The basic network is a first generative adversarial network in which the image set including the first preset number of frames of same images is inputted and a basic time-lapse photography video is outputted. The optimization network is a second generative adversarial network in which output of the basic network is inputted and an optimized time-lapse photography video are outputted.

In an embodiment, FIG. 12 is a structural diagram of another apparatus for generating a neural network model according to an embodiment of the present disclosure. As shown in FIG. 12, the apparatus 1100 includes the modules described in FIG. 11 and the corresponding embodiments. The training module 1120 includes: a first training submodule 1121, an obtaining submodule 1122, and a second training submodule 1123.

The first training submodule 1121 is configured to obtain, through training according to the training sample, a first generative adversarial network meeting a training ending condition as a basic network.

The obtaining submodule 1122 is configured to obtain, according to an image set corresponding to the training video over the basic network, a basic time-lapse photography video outputted by the basic network.

The second training submodule 1123 is configured to obtain, through training according to the basic time-lapse photography video and the training video, a second generative adversarial network meeting the training ending condition as an optimization network.

In an embodiment, the second training submodule 1123 is configured to: obtain an optimized time-lapse photography video according to the basic time-lapse photography video by using a second generator in the second generative adversarial network; obtain a discrimination result according to the optimized time-lapse photography video by using a second discriminator in the second generative adversarial network; generate a loss of the second generative adversarial network according to the optimized time-lapse photography video, the basic time-lapse photography video, the training video, and the discrimination result, the loss including at least a ranking loss, and the ranking loss being determined according to motion features respectively corresponding to the optimized time-lapse photography video, the basic time-lapse photography video, and the training video; and optimize a network parameter of the second generative adversarial network according to the loss of the second generative adversarial network, until the second generative adversarial network meeting the training ending condition is obtained as the optimization network.

In an embodiment, the apparatus further includes a determining module, configured to determine the loss of the second generative adversarial network in the following manners:extracting a feature of the optimized time-lapse photography video, a feature of the basic time-lapse photography video, and a feature of the training video by using the second discriminator in the second generative adversarial network, and calculating a gram matrix corresponding to the optimized time-lapse photography video, a gram matrix corresponding to the basic time-lapse photography video, and a gram matrix corresponding to the training video respectively according to the feature of the optimized time-lapse photography video, the feature of the basic time-lapse photography video, and the feature of the training video, the gram matrix representing a motion state between video frames; determining a ranking loss according to the gram matrix corresponding to the optimized time-lapse photography video, the gram matrix corresponding to the basic time-lapse photography video, and the gram matrix corresponding to the training video; and determining the loss of the second generative adversarial network according to a content loss, an adversarial loss, and the ranking loss of the second generative adversarial network.

In an embodiment, the obtaining module 1110 is configured to: obtain a training video; extract a head-frame image or an end-frame image from the training video; copy the head-frame image or the end-frame image, to generate an image set corresponding to the training video; and use the training video and the image set corresponding to the training video as the training sample.

Based on the foregoing, a method for generating a dual network architecture-based neural network model is provided according to the present disclosure. The dual network architecture includes a basic network used for performing modeling on content of a time-lapse photography video and an optimization network used for performing modeling on a motion state of the time-lapse photography video. The basic network is a first generative adversarial network in which a video including a first preset number of frames of specified frame images is inputted and a basic time-lapse photography video is outputted. The optimization network is a second generative adversarial network in which output of the basic network is inputted and an optimized time-lapse photography video is outputted, and which is used for performing modeling on a motion state of the time-lapse photography video. After multiple training videos are obtained, image sets corresponding to the training videos are generated according to the training videos. The image set includes a head-frame image or an end-frame image in the training video with a first preset number of frames. A neural network model formed through the basic network and the optimization network is trained by using the training videos and the image sets corresponding to the training videos. When a training ending condition is met, the video may be used for generating the time-lapse photography video. According to the neural network model trained by the apparatus, the time-lapse photography video is continuously optimized by a multi-stage generative adversarial network, and a future frame or a historical frame is reasonably predicted by performing modeling on the content and the motion state, to generate the time-lapse photography video from crude to fine gradually. According to the method, on one hand, reality of the content and reasonability of motion information are reserved, so that the generated time-lapse photography video has relatively high reality and is relatively natural. On the other hand, the neural network model trained by the apparatus has a cascaded dual network architecture, which is easy to be implemented and simplified and may be applied to a cloud or an offline scenario.

To more fully describe the technical solution provided by the present disclosure, corresponding to the method for generating a time-lapse photography video provided by the embodiments of the present disclosure, an electronic device is provided according to the present disclosure. The electronic device may be, for example, a local terminal (for example, a local computer and a mobile terminal), or a remote server.

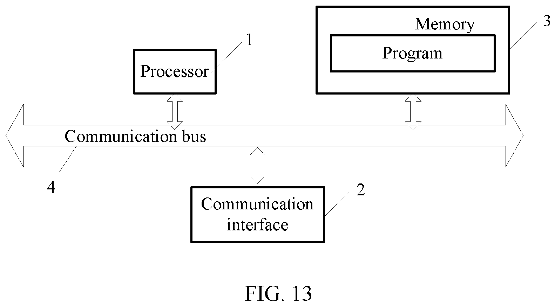

FIG. 13 is a hardware structural diagram of an electronic device according to an embodiment of the present disclosure. As shown in FIG. 13, the electronic device includes: a processor 1, a communications interface 2, a memory 3, and a communications bus 4.

The processor 1, the communications interface 2, and the memory 3 perform mutual communication via the communications bus 4.

The processor 1 is configured to invoke and execute a program stored in the memory.

The memory 3 is configured to store the program.

The program may include a program code, and the program code includes a computer operation instruction. In the embodiment of the present disclosure, the program may include: a program corresponding to the method for training the neural network model so as to generate the time-lapse photography video, and a program corresponding to the method for generating a time-lapse photography video, or either of the two programs.

The processor 1 may be a central processing unit (CPU) or an application-specific integrated circuit (ASIC) or may be one or more integrated circuits configured to implement the embodiments of the present disclosure.

The memory 3 may include a high-speed RAM, or may further include a non-volatile memory, for example, at least one magnetic disk memory.

The program is executed to: obtain a specified image; generate, according to the specified image, an image set including a first preset number of frames of the specified images; and perform modeling on content and a motion state of the image set according to the image set by using a pre-trained neural network model, to obtain a time-lapse photography video outputted by the neural network model. The neural network model is obtained through training according to the method for training a neural network model.

In an embodiment, the program is executed to perform steps of any embodiments of the method for generating the time-lapse photography video provided by the embodiments of the present disclosure.

In addition, a storage medium is further provided according to an embodiment of the present disclosure. The storage medium stores a computer program, and when being executed by a processor, the computer program is used to implement steps of the method for training a neural network model, and/or implement steps of the method for generating the time-lapse photography video in the foregoing embodiments.

An actual application scenario of the present disclosure is briefly described hereinafter. For example, when a user wants to make a time-lapse photography video with sky as an actual scenario, the user may make the video in the following two manners by applying the technical solution provided by the present disclosure.

In a first manner, the user makes the video by a local terminal. An operation performed by the local terminal includes: obtaining a specified image provided by the user, where the specified image may be a picture of the sky shot by the user on the site, or an existing picture of the sky selected by the user; copying the specified image to generate an image set including a first preset number of frames of the specified images; inputting the image set into a neural network model for generating a time-lapse photography video; performing modeling on content and a motion state by using the neural network model, to reconstruct content of the specified images, and outputting an optimized time-lapse photography video.

In the manner, the neural network model for generating the time-lapse photography video is preset in the local terminal, that is, the local terminal may generate the time-lapse photography video independently.

In a second manner, the user operates the local terminal, and obtains the time-lapse photography video by means of the remote server. A specific process is as follows.

The local terminal transmits a specified image to the remote server. The specified image may be a picture of the sky shot by the user on the site, or an existing picture of the sky selected by the user.

The remote server copies the specified image, to generate an image set including a first preset number of frames of the specified images; inputs the image set into a neural network model for generating a time-lapse photography video; performs modeling on content and a motion state by using the neural network model, to reconstruct content of the images; and outputs an optimized time-lapse photography video.

In the manner, the user only needs to transmit the picture of the sky to the remote server via the local terminal, and the neural network model for generating the time-lapse photography video is preset in the remote server. The remote server generates the time-lapse photography video predicted based on the picture of the sky, and then transmits the video to the local terminal of the user.

It may be known from the foregoing technical solutions that, compared with the conventional art, the method and the device for training a neural network model, and the method and the device for generating a time-lapse photography video are provided according to the present disclosure. According to the technical solutions, a dual network architecture-based neural network model for generating a time-lapse photography video is provided. The dual network architecture includes a basic network for performing modeling on content of a time-lapse photography video and an optimization network for performing modeling on a motion state of the time-lapse photography video. The basic network is a first generative adversarial network in which a video including a first preset number of frames of specified images is inputted and a basic time-lapse photography video is outputted. The optimization network is a second generative adversarial network in which the output of the basic network is inputted and, and an optimized time-lapse photography video is outputted, and which is used for performing modeling on a motion state of the time-lapse photography video. After multiple training videos are obtained, image sets corresponding to the training videos are generated according to the training videos. The image set includes a head-frame image or an end-frame image in the training video with a first preset number of frames. A neural network model formed by the basic network and the optimization network is trained by using the training videos and the image sets corresponding to the training videos. When a training ending condition is met, the video may be used for generating the time-lapse photography video.

Before a time-lapse photography video is generated, a specified image is first obtained. A specified image set including a first preset number of frames of the specified images is generated according to the specified image, and then modeling is performed on content and a motion state of the specified image set by using a pre-trained neural network model, to obtain a time-lapse photography video outputted by the neural network model.

According to the technical solution, the time-lapse photography video is continuously optimized by a multi-stage generative adversarial network, and a future frame is reasonably predicted by performing modeling on the content and the motion state, to generate the time-lapse photography video from crude to fine gradually. On one hand, reality of the content and reasonability of motion information are reserved, so that the generated time-lapse photography video has relatively high reality and is relatively natural. On the other hand, the model used has a cascaded dual network architecture, which is easy to be implemented and simplified, and may be applied to a cloud or an offline scenario.

Finally, in this specification, relational terms such as first and second are only used to distinguish one entity or operation from another, and do not necessarily require or imply that any actual relationship or sequence exists between these entities or operations. Moreover, the terms "include", "comprise", or any other variant thereof are intended to cover a non-exclusive inclusion, so that a process, a method, an article, or a device that includes a series of elements not only includes those elements but also includes other elements that are not expressly listed, or further includes elements inherent to such a process, method, article, or an intelligent device. Unless otherwise specified, an element limited by "include a/an..." does not exclude other same elements existing in the process, the method, the article, or the intelligent device that includes the element.

The embodiments in the specification are described in a progressive manner. Each embodiment focuses on a difference from other embodiments. For same or similar parts in the embodiments, one may refer to description of other embodiments. The apparatus, system, intelligent device, and storage medium disclosed in the embodiments correspond to the method disclosed in the embodiment, and thus are described briefly. For related parts, one may refer to the descriptions of the method.

A person skilled in the art may understand that, units and algorithm steps in the examples described in the embodiments disclosed in the present disclosure may be implemented by electronic hardware, computer software, or a combination thereof. To clearly describe the interchangeability between the hardware and the software, compositions and steps of each example are described above in general according to functions. Whether the functions are executed in a mode of hardware or software depends on particular applications and design constraint conditions of the technical solutions. A person skilled in the art may use different methods to implement the described functions for each particular application, and such implementation should not be regarded as going beyond the scope of the present disclosure.

Steps of the method or algorithm described in the embodiments herein may be directly implemented by using hardware, a software module executed by a processor, or a combination thereof. The software module may be arranged in a random access memory (RAM), a memory, a read-only memory (ROM), an electrically programmable ROM, an electrically erasable programmable ROM, a register or any other storage medium well-known in the art.

According to the embodiments disclosed above, a person skilled in the art can implement or use the present disclosure. Various modifications to the embodiments are obvious to the person skilled in the art, and general principles defined in the present disclosure may be implemented in other embodiments without departing from the spirit or scope of the present disclosure. Therefore, the present disclosure is not limited to the embodiments described in the specification, but conforms to the widest scope that is consistent with the principles and novelty disclosed in the present disclosure.

## Claims

1. A method for training a neural network model, applied to a server, the method comprising:

   obtaining a training sample, wherein the training sample comprises a training video and an image set corresponding to the training video, and the image set comprises a head-frame image or an end-frame image in the training video with a first preset number of frames; and
   obtaining, through training according to the training sample, a neural network model meeting a training ending condition, wherein the neural network model comprises a basic network used for performing modeling on content of a time-lapse photography video and an optimization network used for performing modeling on a motion state of the time-lapse photography video,
   wherein the basic network is a first generative adversarial network in which the image set comprising the first preset number of frames of same images are inputted and a basic time-lapse photography video is outputted; and the optimization network is a second generative adversarial network in which output of the basic network is inputted and an optimized time-lapse photography video is outputted.

2. The method according to claim 1, wherein the obtaining, through training according to the training sample, a neural network model meeting a training ending condition comprises:

   obtaining, through training according to the training sample, the first generative adversarial network meeting the training ending condition as the basic network;
   obtaining, over the basic network according to the image set corresponding to the training video, the basic time-lapse photography video outputted by the basic network; and
   obtaining, through training according to the basic time-lapse photography video and the training video, the second generative adversarial network meeting the training ending condition as the optimization network.

3. The method according to claim 2, wherein the obtaining, through training according to the basic time-lapse photography video and the training video, the second generative adversarial network meeting the training ending condition as the optimization network comprises:

obtaining the optimized time-lapse photography video according to the basic time-lapse photography video by using a second generator in the second generative adversarial network;
obtaining a discrimination result according to the optimized time-lapse photography video by using a second discriminator in the second generative adversarial network;
generating a loss of the second generative adversarial network according to the optimized time-lapse photography video, the basic time-lapse photography video, the training video, and the discrimination result, wherein the loss comprises at least a ranking loss, and the ranking loss is determined according to motion features respectively corresponding to the optimized time-lapse photography video, the basic time-lapse photography video, and the training video; and
optimizing a network parameter of the second generative adversarial network according to the loss of the second generative adversarial network, until the second generative adversarial network meeting the training ending condition is obtained as the optimization network.

4. The method according to claim 1, wherein a loss of the second generative adversarial network is determined in the following manners:

extracting a feature of the optimized time-lapse photography video, a feature of the basic time-lapse photography video, and a feature of the training video by using a second discriminator in the second generative adversarial network, and calculating a gram matrix corresponding to the optimized time-lapse photography video, a gram matrix corresponding to the basic time-lapse photography video, and a gram matrix corresponding to the training video respectively according to the feature of the optimized time-lapse photography video, the feature of the basic time-lapse photography video, and the feature of the training video, wherein the gram matrix represents a motion state between video frames;
determining a ranking loss according to the gram matrix corresponding to the optimized time-lapse photography video, the gram matrix corresponding to the basic time-lapse photography video, and the gram matrix corresponding to the training video; and
determining the loss of the second generative adversarial network according to a content loss, an adversarial loss, and the ranking loss of the second generative adversarial network.

5. The method according to claim 1, wherein the obtaining a training sample comprises:

obtaining a training video;
extracting a head-frame image or an end-frame image from the training video;
copying the head-frame image or the end-frame image, to generate an image set corresponding to the training video; and
using the training video and the image set corresponding to the training video as the training sample.

6. A method for generating a time-lapse photography video, applied to an electronic device, the method comprising:

obtaining a specified image;
generating, according to the specified image, an image set comprising a first preset number of frames of the specified images; and
performing modeling on content and a motion state of the image set according to the image set by using a pre-trained neural network model, to obtain a time-lapse photography video outputted by the neural network model, wherein the neural network model is obtained through training by using the method according to any one of claims 1 to 5.

7. The method according to claim 1, wherein the electronic device is a terminal device provided with the neural network model, and the obtaining a specified image comprises:

obtaining a photo selected in an album as the specified image in response to a selection instruction; or
obtaining a shot photo as the specified image in response to a shooting instruction.

8. The method according to claim 1, wherein the electronic device is a server, and the obtaining a specified image comprises:

receiving a time-lapse photography generating request transmitted by a terminal device, wherein the time-lapse photography generating request carries the specified image; and
obtaining the specified image from the time-lapse photography generating request.

9. An apparatus for training a neural network model, comprising:

an obtaining module, configured to obtain a training sample, wherein the training sample comprises a training video and an image set corresponding to the training video, and the image set comprises a head-frame image or an end-frame image in the training video with a first preset number of frames; and
a training module, configured to obtain, through training according to the training sample, a neural network model meeting a training ending condition, wherein the neural network model comprises a basic network used for performing modeling on content of a time-lapse photography video and an optimization network used for performing modeling on a motion state of the time-lapse photography video; the basic network is a first generative adversarial network in which the image set comprising the first preset number of frames of same images is inputted and a basic time-lapse photography video is outputted; and the optimization network is a second generative adversarial network in which output of the basic network is inputted and an optimized time-lapse photography video is outputted.

10. An apparatus for generating a time-lapse photography video, comprising:

an obtaining module, configured to obtain a specified image;
a first generating module, configured to generate, according to the specified image, an image set comprising a first preset number of frames of the specified images; and
a second generating module, configured to perform modeling on content and a motion state of the image set according to the image set by using a pre-trained neural network model, to obtain a time-lapse photography video outputted by the neural network model, wherein the neural network model is obtained through training by using the method according to any one of claims 1 to 5.

11. A system for generating a time-lapse photography video, comprising:

a terminal and a server,
wherein the terminal interacts with the server over a network; and
the server is configured to receive a specified image transmitted by the terminal, generate, according to the specified image, an image set comprising a first preset number of frames of the specified images, perform modeling on content and a motion state of the image set according to the image set by using a pre-trained neural network model, to obtain a time-lapse photography video outputted by the neural network model, and transmit the time-lapse photography video to the terminal, wherein the neural network model is obtained through training by using the method according to any one of claims 1 to 5.

12. An electronic device, comprising a memory and a processor, wherein
the memory is configured to store a computer program; and
the processor is configured to invoke and execute the computer program stored in the memory, to implement the method for training a neural network model according to any one of claims 1 to 5, or to implement the method for generating a time-lapse photography video according to any one of claims 6 to 8.

13. A storage medium storing a computer program, wherein the computer program is executed by a processor for implementing the method for training a neural network model according to any one of claims 1 to 5, or for implementing the method for generating a time-lapse photography video according to any one of claims 6 to 8.

14. A computer program product comprising an instruction, wherein when run on a computer, the instruction causes the computer to perform the method for training a neural network model according to any one of claims 1 to 5, or perform the method for training a time-lapse photography video according to any one of claims 6 to 8.

| Obtain a specified image | $\diagdown$ S11 |

↓

| Generate, according to the specified image, an image set including a first preset number of frames of the specified images | $\diagdown$ S12 |

↓

| Perform modeling on content and a motion state of the image set according to the image set by using a pre-trained neural network model, to obtain a time-lapse photography video outputted by the neural network model | $\diagdown$ S13 |

FIG. 1

| Obtain a training sample | $\diagdown$ S21 |

↓

| Obtain, through training according to the training sample, a neural network model meeting a training ending condition, the neural network model including a basic network used for performing modeling on content of a time-lapse photography video and an optimization network used for performing modeling on a motion state of the time-lapse photograph video | $\diagdown$ S22 |

FIG. 2

| Obtain, through training according to the training sample, a first generative adversarial network meeting a training ending condition as a basic network | S31 |

| Obtain, according to the image set corresponding to the training video over the basic network, a basic time-lapse photography video outputted by the basic network | S32 |

| Obtain, through training according to the basic time-lapse photography video and the training video, a second generative adversarial network meeting the training ending condition as an optimization network | S33 |

FIG. 3

| Input the image set into a first generator, to obtain a basic time-lapse photograph video outputted by the first generator | S41 |

| Input the basic time-lapse photography video and a training video corresponding to the image set into the first discriminator, and calculate a loss of a first generative adversarial network by using a loss function of the first generative adversarial network | S42 |

| Update a parameter of the first generator and a parameter of the first discriminator based on the loss of the first generative adversarial network | S43 |

FIG. 4

FIG. 5

| | |
|---|---|
| Obtain an optimized time-lapse photography video according to the basic time-lapse photography video by using a second generator in the second generative adversarial network | S61 |
| Obtain a discrimination result according to the optimized time-lapse photography video by using a second discriminator in the second generative adversarial network | S62 |
| Generate a loss of the second generative adversarial network according to the optimized time-lapse photography video, the basic time-lapse photography video, the training video and the discrimination result | S63 |
| Optimize a network parameter of the second generative adversarial network according to the loss of the generative adversarial network, until the second generative adversarial network meeting a training ending condition is obtained as the optimization network | S64 |

FIG. 6

FIG. 7

FIG. 8

| Remote server | | Local terminal |
|---|---|---|

S91: Specified image

S92: Copy the specified image and generate an image set including a first preset quantity of frames of the specified images

S93: Input the image set into a neural network model used for generating a time-lapse photography video

S94: Reconstruct content of the specified image in the image set by using the neural network model, to output the time-lapse photography video

S95: Time-lapse photography video

FIG. 9

1000

| 1010 | 1020 | 1030 |
|---|---|---|
| Obtaining module | First generating module | Second generating module |

FIG. 10

1100

Obtaining module 1110 ——— Training module 1120

**FIG. 11**

1100

Obtaining module 1110

First training submodule 1121

Obtaining submodule 1122

Second training submodule 1123

1120

**FIG. 12**

FIG. 13

## INTERNATIONAL SEARCH REPORT

International application No.

**PCT/CN2019/076724**

| A. | CLASSIFICATION OF SUBJECT MATTER |
|---|---|

G06T 15/20(2011.01)i

According to International Patent Classification (IPC) or to both national classification and IPC

| B. | FIELDS SEARCHED |
|---|---|

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNKI, WPI, EPODOC, CNPAT, IEEE: 人工智能, 神经网络, 训练, 样本, 延时, 缩时, 摄影, 录影, 录像, 时延, 图像, 视频, AI, artificial intelligence, neural network, video, image, picture, time-lapse, train, sample, photograph

| C. | DOCUMENTS CONSIDERED TO BE RELEVANT | |
|---|---|---|
| Category* | Citation of document, with indication, where appropriate, of the relevant passages | Relevant to claim No. |
| A | CN 106779073 A (XI"AN SHIYOU UNIVERSITY) 31 May 2017 (2017-05-31) claim 5 | 1-14 |
| A | CN 102737369 A (CASIO COMPUTER CO., LTD.) 17 October 2012 (2012-10-17) entire document | 1-14 |
| A | CN 107624243 A (MICROSOFT TECHNOLOGY LICENSING LLC) 23 January 2018 (2018-01-23) entire document | 1-14 |
| A | US 7289127 B1 (APPLE, INC.) 30 October 2007 (2007-10-30) entire document | 1-14 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 May 2019** | **29 May 2019** |

| Name and mailing address of the ISA/CN | Authorized officer |
|---|---|
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2019/076724**

| Patent document cited in search report | | | Publication date (day/month/year) | Patent family member(s) | | | Publication date (day/month/year) |
|---|---|---|---|---|---|---|---|
| CN | 106779073 | A | 31 May 2017 | None | | | |
| CN | 102737369 | A | 17 October 2012 | US | 2012250997 | A1 | 04 October 2012 |
| | | | | EP | 2506552 | A1 | 03 October 2012 |
| | | | | JP | 2012215927 | A | 08 November 2012 |
| | | | | JP | 2013131077 | A | 04 July 2013 |
| CN | 107624243 | A | 23 January 2018 | US | 2016330399 | A1 | 10 November 2016 |
| | | | | EP | 3295425 | A1 | 21 March 2018 |
| | | | | WO | 2016182646 | A1 | 17 November 2016 |
| US | 7289127 | B1 | 30 October 2007 | US | 7782337 | B1 | 24 August 2010 |

Form PCT/ISA/210 (patent family annex) (January 2015)

**REFERENCES CITED IN THE DESCRIPTION**

**Patent documents cited in the description**

- CN 201810253848